# EUROPÄISCHE PATENTANMELDUNG

(11) **EP 0 827 000 A1**
(43) Veröffentlichungstag der Anmeldung: **04.03.1998**
(21) Anmeldenummer: 97114136.1
(22) Anmeldetag: 16.08.1997
(51) Int. Cl.: G02B 7/16

(54) **Anordnung zur Modulation der Eigenschaften eines optischen systems**

(30) Priorität: 29.08.1996 DE 19634943
(71) Anmelder: Carl Zeiss Jena GmbH, 07740 Jena (DE)
(72) Erfinder: Fischer, Andreas, Dipl.-Ing., 07980 Berga (DE); Hofmann, Reiner, Dr.-Ing., 99510 Apolda (DE); Leitel, Armin, Dr.-Ing., 07745 Jena (DE)
(74) Vertreter: Muhsfeldt, Willi

(57) **Zusammenfassung**

Die Erfindung bezieht sich auf eine Anordnung zur Modulation der Eigenschaften eines optischen Systems die mit mindestens einer Antriebseinheit, einer Ansteuerschaltung für die Antriebseinheit sowie mindestens einer trommelartigen Trägerscheibe ausgestattet ist. Die Trägerscheibe dient der Aufnahme und dem wechselweisen Einbringen optischer Bauelemente wie Filter, Blenden oder Linsen in einen optischen Strahlengang und ist zu diesem Zweck auf gestellfesten Geräteteilen drehbar gelagert.

Die Aufgabe der Erfindung wird bei einer Anordnung zur Modulation eines optischen Systems der genannten Gattung dadurch gelöst, daß als Antriebseinheiten für die Trägerscheiben (1,2) Piezomotoren vorgesehen sind, die nach dem Mikrostoßantrieb arbeiten und bei denen piezoelektrisch anregbare Funktionsschichten an der Materialoberfläche eines Teiles gegen passive Funktionsschichten an der Materialoberfläche eines zweiten Teiles wirken, wodurch eine Relativbewegung dieser beiden Teile zueinander ausgelöst wird. Dazu sind die Oberflächenabschnitte an den Trägerscheiben (1,2) und an den gestellfesten Geräteteilen (11), die sich berührend gegenüberstehen, als Funktionsschichten des Piezomotors ausgebildet. Die aktiven, piezoelektrisch anregbaren Funktionsschichten sind jeweils mit der Ansteuereinheit (13) verbunden.

## Beschreibung

Die Erfindung bezieht sich auf eine Anordnung zur Modulation der Eigenschaften eines optischen Systems, die mit mindestens einer Antriebseinheit, einer Ansteuerschaltung für die Antriebseinheit sowie mindestens einer trommelartigen Trägerscheibe ausgestattet ist. Die Trägerscheibe dient der Aufnahme und dem wechselweisen Einbringen optischer Bauelemente wie Filter, Blenden oder Linsen in einen optischen Strahlengang und ist zu diesem Zweck auf gestellfesten Geräteteilen drehbar gelagert.

In optischen Geräten ist es oftmals erforderlich, zwecks Änderung der physikalischen Eigenschaften des optischen Strahlenganges in Betriebspausen oder auch während der Nutzung dieser Geräte optische Bauelemente in den Strahlengang zusätzlich einzubringen oder gegeneinander auszutauschen.

So ist zum Beispiel während des Betriebes von Geräten zur konvokalen Laser-Scan-Ophtalmoskopie bei der Auswertung des Autofluoreszenzverhaltens von gewebeeigenen Fluorophoren im Augenhintergrund während einer Laserkoagulation der Wechsel von Wellenlängen-Filtern erforderlich. Die Veränderungen des Fluoreszenzverhaltens sind in diesem Fall ein Maß für den Behandlungsfortschritt, der mit optischen Filtern unterschiedlicher Wellenlängen verfolgt werden kann.

Weitere Anwendungsgebiete für optische Geräte, bei denen Bauelemente gleichzeitig oder im Wechsel in den Strahlengang eingebracht werden müssen, finden sich u.a. im Zusammenhang mit der Endoskopie, Mikrophotometrie und allgemein in bildverarbeitenden Systemen.

Um das Einbringen verschiedener optischer Bauelemente wechselweise in den Strahlengang zu ermöglichen, sind drehbare Halterungen entwickelt worden, deren Drehachse parallel zur optischen Achse des Gerätestrahlenganges angeordnet ist und auf denen die gegeneinander auszutauschenden Bauelemente auf einem Teilkreis angeordnet sind. Die optischen Achsen dieser Bauelemente sind notwendigerweise ebenfalls parallel zur Drehachse der Halterung ausgerichtet und haben dabei alle den gleichen Abstand zur Drehachse.

Der Austausch eines im Strahlengang befindlichen Bauelements durch ein anderes erfolgt durch Drehen der Halterung um einen Drehwinkel, der dem Abstand der auszutauschenden Bauelemente auf dem Teilkreis der Halterung entspricht. Dabei kommt es darauf an, die optischen Achsen von Bauelement und Gerätestrahlengang deckungsgleich auszurichten.

Um das zu gewährleisten, ist einerseits eine hinreichend genaue Positionierung des Bauelementes im Abstandes zur Drehachse und andererseits eine hohe Genauigkeit beim Einhalten des Drehwinkels erforderlich.

In der optischen Gerätetechnik hat sich der Einsatz elektomagnetischer Antriebe für solche Vorgänge durchgesetzt, wie Schrittschaltwerke oder Schrittmotoren. Zur Kopplung der drehbaren Halterung mit dem Antrieb sind mechanische Getriebe oder Getriebeglieder vorgesehen. Das ergibt sich bei den meisten Antriebskonfigurationen notwendig aus der Tatsache, daß elektromagnetische Antriebe ein schlechtes Start-Stop-Verhalten aufweisen, das in relativ langen Anstiegs- und Abfallzeiten für das Drehmoment begründet ist. Der Rotor muß schnell anlaufen, damit der Antrieb das optimale Drehmoment abgeben kann; das aber ist für Motoren kleiner Leistung bei Anwendungen für langsame Bewegungsabläufe, wie im vorliegenden Fall, nur durch Zwischenschaltung von Getrieben möglich. Daraus ergeben sich die Nachteile einer großen Bauform, eines geringen Wirkungsgrades, einer aufwendigen Ansteuereinrichtung und hoher Kosten.

Diese Nachteile vervielfachen sich, wenn derartige Vorrichtungen mehrfach im Strahlengang hintereinander anzuordnen und mit Antrieben zu versehen sind.

In der DE OS 3627185 ist eine elektromagnetische Wechseleinrichtung für die Aufnahme von optisch wirksamen Elementen, insbesondere von Filtern, Objektiven, Kondensoren o.ä. beschrieben, die einen elektromagnetischen Schrittmotor aufweist und bei der das drehbewegliche Teil selbst als Rotor des Schrittmotors ausgebildet ist. Dabei sind Abschnitte der äußeren oder der inneren Mantelfläche bzw. Abschnitte einer ringförmigen Planfläche Pole des Schrittantriebes. Mit diesem Vorschlag reduziert sich zwar die Baugröße der Anordnung geringfügig, die Nachteile des ungünstigen Beschleunigungsverhaltens, der aufwendigen Ansteuerschaltung und der hohe Kostenaufwand treffen jedoch auch hier zu.

Der Erfindung liegt die Aufgabe zugrunde, eine Anordnung zur Modulation der Eigenschaften eines optischen Systems zu schaffen, die mit mindestens einer Antriebseinheit, einer Ansteuerschaltung für die Antriebseinheit sowie mindestens einer trommelartigen Trägerscheibe ausgestattet ist, welche der Aufnahme und dem wechselweisen Einbringen optischer Bauelemente, wie Filter, Blenden oder Linsen, in einen optischen Strahlengang dient und die zu diesem Zweck auf gestellfesten Geräteteilen drehbar gelagert ist, wobei sich Oberflächenabschnitte der Trägerscheibe und der gestellfesten Geräteteile berührend gegenüberstehen.

Erfindungsgemäß wird die Aufgabe bei einer Anordnung zur Modulation eines optischen Systems der genannten Gattung dadurch gelöst, daß als Antriebseinheiten für die Trägerscheiben Piezomotoren vorgesehen sind, die nach dem Mikrostoßantrieb arbeiten und bei denen piezoelektrisch anregbare Funktionsschichten an der Materialoberfläche eines Teiles gegen passive Funktionsschichten an der Materialoberfläche eines zweiten Teiles wirken, wodurch eine Relativbewegung dieser beiden Teile zueinander ausgelöst wird. Dazu sind die Oberflächenabschnitte an den Trägerscheiben und an den gestellfesten Geräteteilen, die sich berührend gegenüberstehen, als Funktionsschichten des Piezomotors ausgebildet. Die aktiven, piezoelektrisch anregbaren Funktionsschichten sind jeweils mit der Ansteuerschaltung verbunden.

Der Vorteil dieser Anordnung besteht darin, daß die Kopplung zwischen der Antriebseinheit und der Trägerscheibe ohne Zwischenschaltung eines Getriebes erfolgt, woraus sich weiterhin eine geringe Baugröße, ein höherer Wirkungsgrad und schließlich geringere Kosten ergeben.

Es ist vorteilhaft, wenn die aktiven, piezoelektrisch anregbaren Funktionsschichten an den Oberflächenabschnitten der gestellfesten Geräteteile und die passiven Funktionsflächen auf den korrespondierenden Oberflächenabschnitten der Trägerscheiben angeordnet sind. Alternativ dazu ist es jedoch denkbar, umgekehrt die piezoelektrisch anregbaren Funktionsschicht an den Oberflächenabschnitten der Trägerscheiben und die passiven Funktionsflächen an den gestellfesten Geräteteilen vorzusehen.

Die aktiven, piezoelektrisch anregbaren Funktionsschichten sollten aus einem elastisch deformierbaren Material bestehen, während für die passiven Funktionsflächen ein Antifriktionsmaterial vorzusehen ist, um die Oberflächenbewegungen an der aktiven Funktionsfläche in eine Mitnahmebewegung der passiven Funktionsfläche zu wandeln.

Die Funktionsschichten des Piezomotors können sowohl an den Stirnseiten als auch an den Umfangsflächen der sich gegenüberstehenden Flächen angeordnet sein. Dabei kommen die Umfangsflächen im Zentrum der Trägerscheiben wie auch die Flächen an deren äußerem Umfang in Betracht.

Verschiedenartige vorteilhafte Ausgestaltungen der Erfindung besteht darin, die Trägerscheiben in Richtung des Strahlenganges mehrfach hintereinander anzuordnen. Dabei können zwischen den Trägerscheiben gestellfeste Zwischenlagen vorgesehen sein, wobei sich die piezoelektrischen Funktionsschichten an den Stirnflächen der Trägerscheiben und den Stirnflächen der gestellfesten Zwischenlagen befinden. Alternativ dazu können die Trägerscheiben ohne gestellfeste Zwischenlagen unmittelbar aufeinander folgend angeordnet sein; dann sollten sich die piezoelektrischen Funktionsschichten an den Umfangsflächen der Trägerscheiben und den Umfangsflächen der gestellfesten Zwischenlagen befinden. Daneben ist eine Ausgestaltungsvariante denkbar, bei der sich die piezoelektrischen Funktionsschichten am Umfang sowie an den Stirnseiten der gegenüberliegenden Flächen der Trägerscheiben als auch der gestellfesten Zwischenlagen befinden. In jedem dieser Fälle sollten die piezoelektrischen Funktionsschichten der einzelnen Trägerscheiben separat ansteuerbar sein.

Die Erfindung soll nachfolgend an einem Ausführungsbeispiel näher erläutert werden. In der zugehörigen Zeichnung zeigen
- Fig.1: eine Prinzipdarstellung der erfindungsgemäßen Anordnung
- Fig.2: einen Zeichnungsausschnitt mit den piezoelektrischen Funktionsschichten

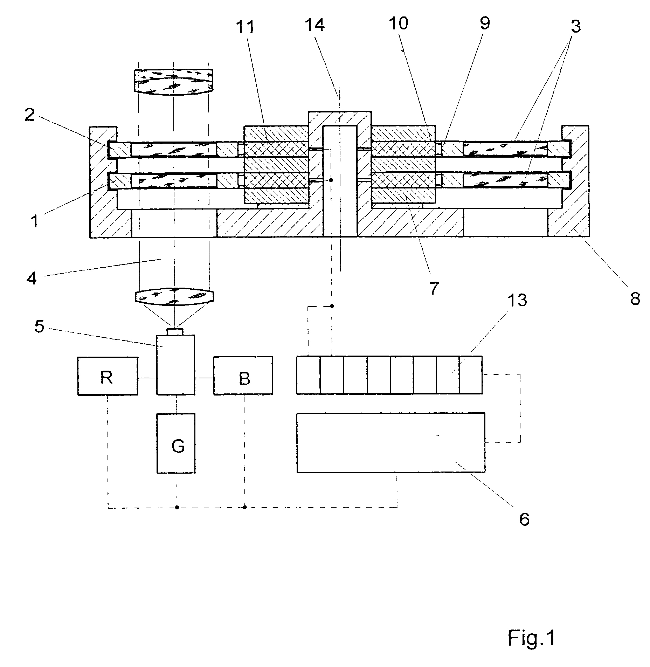

In Fig.1 ist in einer Prinzipdarstellung eine Anordnung zur Modulation der Eigenschaften eines optischen Systems zu erkennen, die mit zwei trommelartigen Trägerscheiben 1,2 ausgestattet ist, welche der Aufnahme und dem wechselweisen Einbringen optischer Wellenlängenfilter 3 in den optischen Strahlengang 4 einer Bilderzeugungseinheit dient. Die Trägerscheiben 1,2 sind um eine Achse 14 drehbar angeordnet. Die Bilderzeugungseinheit sei durch die drei Strahlungsquellen R,G und B sowie einen Projektor 5 symbolisiert; sie ist mit einer Modulations- und Steuereinheit 6 verbunden.

Die Trägerscheiben 1,2 sind in Richtung des Strahlenganges 4 hintereinander angeordnet. Zwischen den Trägerscheiben 1,2 sind gestellfeste Zwischenlagen 7 vorgesehen.

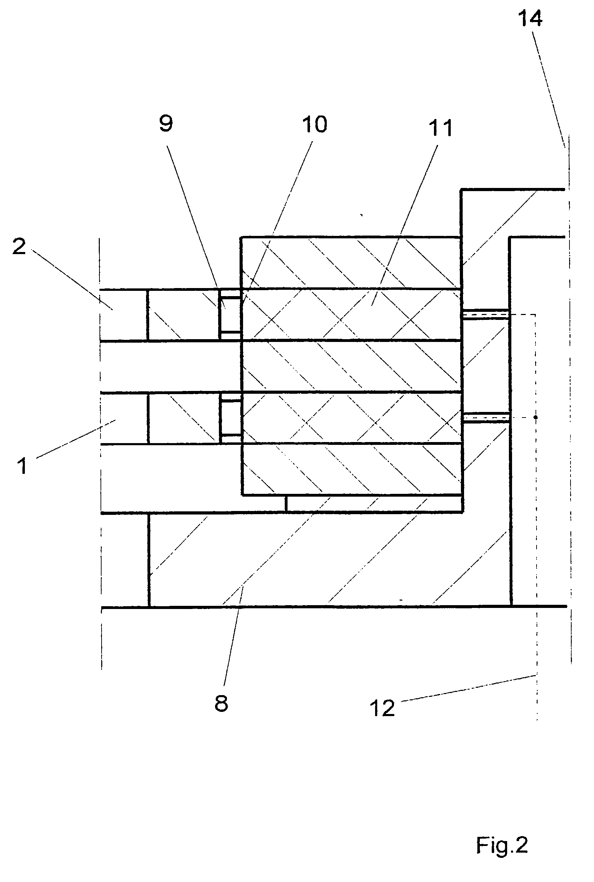

Jede der Trägerscheiben 1,2 ist an ihrem äußeren Umfang gleitend eingefaßt in einer Halterung 8 und befindet sich damit in einer definierten Lage zum Strahlengang 4. Die inneren Umfangsflächen 9 der Trägerscheiben 1,2 stehen den äußeren Umfangsflächen 10 der gestellfesten Teile 11 gegenüber (siehe auch Fig. 2).

Auf die äußeren Umfangsflächen 10 der gestellfesten Teile 11 sind piezoelektrisch anregbare Funktionsschichten aus einem elastisch deformierbaren Material aufgebracht, während die inneren Umfangsflächen 9 der Trägerscheiben 1,2 als passive Funktionsflächen ausgebildet und mit einem Antifriktionsmaterial versehen sind.

Die aktiven, piezoelektrisch anregbaren Funktionsschichten sind jeweils über Signalwege 12 mit einer Ansteuerschaltung 13 verbunden, die ihrerseits mit der Steuer- und Modulationseinheit 6 in Verbindung steht.

Wird es während des Betriebes des beispielhaft dargestellten optischen Systems erforderlich, die im Strahlengang befindlichen Filter zu wechseln, wird ein entsprechender Befehl von der Steuer- und Modulationseinheit 6 an die Ansteuerschaltung 13 ausgegeben. Von dort wird die Anregung der piezoelektrischen Funktionsschichten an den äußeren Umfangsflächen 10 der gestellfesten Teile 11 veranlaßt. Dadurch werden an diesen Schichten Oberflächenbewegungen in Form von Mikrostößen ausgelöst, die an der gegenüberliegenden passiven Funktionsfläche der Trägerscheiben 1,2 eine Mitnahmebewegung und so deren Drehbewegung um die Achse 14 bewirken.

Dabei kann wahlweise je nach Ansteuerung über verschiedene Signalwege die Trägerscheibe 1, die Trägerscheibe 2 oder beide Trägerscheiben 1,2 in Drehbewegung versetzt werden.

Die Drehbewegung erfolgt dabei in fein regulierbaren Schritten bei relativ hoher Drehgeschwindigkeit und erschütterungsfreiem Lauf. Es sind Verstellschritte unter 1µm und damit eine hinreichend gute Positioniergenauigkeit möglich. Die Ansteuerschaltung 13 ist mit Standardschnittstellen versehen und läßt sich problemlos in Gerätesysteme integrieren.

Neben der beispielhaft dargestellten Ausgestaltungsvariante sind weitere Ausgestaltungsvarianten (vgl. Unteransprüche) denkbar. So z.B. die Anordnung der aktiven Funktionsschicht nicht nur an den Umfangsflächen, sondern auch oder alternativ an den Stirnflächen der gestellfesten Teile 11; denkbar ist auch die Anordnung weiterer separater Trägerscheiben usw.

Die Anzahl der optischen Elemente auf den Trägerscheiben und damit der Drehwinkel bei Austausch einzelner Elemente gegeneinander ist konstruktiv mit der Größe der Trägerscheibe wählbar. Dabei ist es durchaus möglich und unkritisch, die Trägerscheiben mit optischen Bauelementen in unterschiedlicher Stückzahl auszustatten.

### Bezugszeichenliste

- 1,2: Trägerscheiben
- 3: Wellenlängenfilter
- 4: optischen Strahlengang
- 5: Projektor
- 6: Modulations- und Steuereinheit
- 7: gestellfeste Zwischenlagen
- 8: Halterung
- 9: innere Umfangsfläche
- 10: äußere Umfangsfläche
- 11: gestellfestes Teil
- 12: Signalweg
- 13: Ansteuerschaltung
- 14: Achse
- R,G,B: Strahlungsquellen

## Patentansprüche

1. Anordnung zur Modulation der Eigenschaften eines optischen Systems, mit mindestens einer Antriebseinheit, einer Ansteuerschaltung für die Antriebseinheit und mindestens einer trommelartigen Trägerscheibe, die zur Aufnahme und zum wechselweisen Einbringen optischer Bauelemente wie Filter, Blenden oder Linsen in einen optischen Strahlengang dient und die zu diesem Zweck auf gestellfesten Geräteteilen drehbar gelagert ist, wobei sich Oberflächenabschnitte der Trägerscheibe und der gestellfesten Geräteteile berührend gegenüberstehen, dadurch gekennzeichnet,
- daß als Antriebseinheiten Piezomotoren vorgesehen sind, bei denen eine aktive, piezoelektrisch anregbare Funktionsschicht an einem ersten Teil gegen eine passive Funktionsschicht an einem zweiten Teil wirkt und dabei nach dem Vibrationsprinzip eine Relativbewegung beider Teile zueinander auslöst,
- daß diejenigen Oberflächenabschnitte an den Trägerscheiben (1,2) und an den gestellfesten Geräteteilen (11), die sich berührend gegenüberstehen, als Funktionsschichten des Piezoantriebes ausgebildet sind und
- daß die aktiven, piezoelektrisch anregbaren Funktionsschichten mit der Ansteuerschaltung (13) verbunden sind.

2. Anordnung zur Modulation der Eigenschaften eines optischen Systems nach Anspruch 1, dadurch gekennzeichnet, daß die aktiven, piezoelektrisch anregbaren Funktionsschichten an den Oberflächenabschnitten der gestellfesten Geräteteile (11) und die passiven Funktionsflächen an den korrespondierend gegenüberstehenden Oberflächenabschnitten der Trägerscheiben (1,2) angeordnet sind.

3. Anordnung zur Modulation der Eigenschaften eines optischen Systems nach einem der vorgenannten Ansprüche, dadurch gekennzeichnet, daß die Funktionsschichten des Piezomotors an den Stirnflächen der Trägerscheiben (1,2) und den Stirnflächen der gestellfesten Geräteteile (11) angeordnet sind.

4. Anordnung zur Modulation der Eigenschaften eines optischen Systems nach einem der Ansprüche 1 und 2, dadurch gekennzeichnet, daß die Funktionsschichten des Piezomotors an den Umfangsflächen der Trägerscheiben (1,2) und den Umfangsflächen der gestellfesten Geräteteilen (11) angeordnet sind.

5. Anordnung zur Modulation der Eigenschaften eines optischen Systems nach Anspruch 4, dadurch gekennzeichnet, daß die Funktionsschichten des Piezomotors an den Umfangsflächen (9) im Zentrum der Trägerscheiben (1,2) und an den Umfangsflächen (8) der gestellfesten Geräteteile (11) angeordnet sind.

6. Anordnung zur Modulation der Eigenschaften eines optischen Systems nach einem der vorgenannten Ansprüche, dadurch gekennzeichnet, daß die Trägerscheiben (1,2) in Richtung des optischen Strahlenganges (4) mehrfach hintereinander angeordnet sind, zwischen den Trägerscheiben (1,2) gestellfeste Zwischenlagen (7) vorgesehen sind und jede der Trägerscheiben (1,2) separat ansteuerbar ist, wobei sich die piezoelektrischen Funktionsschichten an den Stirnflächen der Trägerscheiben (1,2) und der gestellfesten Zwischenlagen (7) befinden.

7. Anordnung zur Modulation der Eigenschaften eines optischen Systems nach einem der Ansprüche 1 bis 6, dadurch gekennzeichnet, daß die Trägerscheiben (1,2) in Richtung des optischen Strahlenganges (4) mehrfach hintereinander und unmittelbar aufeinander folgend angeordnet sind und jede der Trägerscheiben (1,2) separat ansteuerbar ist, wobei sich die piezoelektrischen Funktionsschichten an den Umfangsflächen der Trägerscheiben (1,2) und der gestellfesten Zwischenlagen (7) befinden.

8. Anordnung zur Modulation der Eigenschaften eines optischen Systems nach einem der Ansprüche 1 bis 6, dadurch gekennzeichnet, daß die Trägerscheiben (1,2) in Richtung des optischen Strahlenganges (4) mehrfach hintereinander und unmittelbar aufeinander folgend angeordnet sind und jede der Trägerscheiben (1,2) separat ansteuerbar ist, wobei sich die piezoelektrischen Funktionsschichten am Umfang und an den Stirnseiten sowohl der Trägerscheiben (1,2) als auch der gestellfesten Zwischenlagen (7) befinden.

9. Anordnung zur Modulation der Eigenschaften eines optischen Systems nach einem der vorgenannten Ansprüche, dadurch gekennzeichnet, daß die aktiven, piezoelektrisch anregbaren Funktionsschichten aus einer elastisch deformierbaren Materialschicht und die passiven Funktionsflächen aus einem Antifriktionsmaterial bestehen, wodurch die Oberflächenbewegungen an der aktiven Funktionsfläche in eine Mitnahmebewegung an der passiven Funktionsfläche gewandelt wird.
